# EUROPEAN PATENT APPLICATION

(11) **EP 4 503 703 A1**
(43) Date of publication of application: **05.02.2025**
(21) Application number: 23778183.6
(22) Date of filing: 28.03.2023
(51) Int. Cl.: H04W 24/02, H04L 67/14

(54) **DEVICE DETERMINATION METHOD AND APPARATUS AND COMMUNICATION DEVICE**

(30) Priority: 28.03.2022 CN 202210314847
(71) Applicant: Vivo Mobile Communication Co., Ltd., Dongguan, Guangdong 523863 (CN)
(72) Inventor: CHENG, Sihan, Dongguan, Guangdong 523863 (CN); CHONG, Weiwei, Dongguan, Guangdong 523863 (CN)
(74) Representative: Murgitroyd & Company
(86) International application number: PCT/CN2023/084339
(87) International publication number: WO 2023/185818

(57) **Abstract**

This application discloses a device determining method and apparatus, and a communication device. The device determining method includes: sending, by a first communication device, a first request message to a second communication device, where the first request message is used for requesting to obtain network performance analytics information; and receiving, by the first communication device, the network performance analytics information from the second communication device, where the network performance analytics information includes network performance analytics information corresponding to M candidate devices. Network performance analytics information corresponding to one candidate device includes at least one of the following information: radio access technology information of the one candidate device; information about a time at which the one candidate device is able to participate in federated learning; location information of the one candidate device; information about a time period in which the one candidate device has network coverage; information about a proportion of the time period in which the one candidate device has network coverage to a time of interest during the time of interest; and network signal quality information of the one candidate device.

## Description

This application claims priority to Chinese Patent Application No. 202210314847.1, filed with the China National Intellectual Property Administration on March 28, 2022 and entitled "DEVICE DETERMINING METHOD AND APPARATUS, AND COMMUNICATION DEVICE", which is incorporated herein by reference in its entirety.

### TECHNICAL FIELD

This application pertains to the field of communication technologies, and specifically relates to a device determining method and apparatus, and a communication device.

### BACKGROUND

With the development of communication technologies, federated learning emerges. Federated learning includes horizontal federated learning and vertical federated learning. Horizontal federated learning increases the number of training samples by combining same data features of different samples of participating devices; and vertical federated learning increases feature dimensions of training samples by combining different data features of common samples of participating devices, so as to obtain a better model.

"Member selection" is particularly important for federated learning. Selecting appropriate devices (such as user equipment (User Equipment, UE)) for federated learning can improve training efficiency. On the contrary, selecting inappropriate devices for federated learning may affect training efficiency and training results. Federated learning performed by serving consumer devices (such as an application function (Application Function, AF)) is used as an example. Generally, the AF may select some devices in an area (such as a specific area or a specific cell) for federated learning based on network performance corresponding to the area reported by a network data analytics function (Network Data Analytics Function, NWDAF). However, due to a difference of network performance between different devices in the same area, how to select an appropriate device to participate in federated learning has become a problem to be urgently resolved.

### SUMMARY

Embodiments of this application provide a device determining method and apparatus, and a communication device, which can implement selection of appropriate devices for participating in federated learning.

According to a first aspect, a device determining method is provided. The method includes: sending, by a first communication device, a first request message to a second communication device, where the first request message is used for requesting to obtain network performance analytics information; and receiving, by the first communication device, the network performance analytics information from the second communication device, where the network performance analytics information includes network performance analytics information corresponding to M candidate devices, and M is a positive integer. Network performance analytics information corresponding to one candidate device includes at least one of the following information: radio access technology information of the one candidate device; information about a time at which the one candidate device is able to participate in federated learning; location information of the one candidate device; information about a time period in which the one candidate device has network coverage; information about a proportion of the time period in which the one candidate device has network coverage to a time of interest during the time of interest; and network signal quality information of the one candidate device.

According to a second aspect, a device determining method is provided. The method includes: receiving, by a second communication device, a first request message from a first communication device, where the first request message is used for requesting to obtain network performance analytics information; and sending, by the second communication device, the network performance analytics information to the first communication device, where the network performance analytics information includes network performance analytics information corresponding to M candidate devices, and M is a positive integer. Network performance analytics information corresponding to one candidate device includes at least one of the following information: radio access technology information of the one candidate device; information about a time at which the one candidate device is able to participate in federated learning; location information of the one candidate device; information about a time period in which the one candidate device has network coverage; information about a proportion of the time period in which the one candidate device has network coverage to a time of interest during the time of interest; and network signal quality information of the one candidate device.

According to a third aspect, a device determining apparatus is provided, including: a sending module, configured to send a first request message to a second communication device, where the first request message is used for requesting to obtain network performance analytics information; and a receiving module, configured to receive the network performance analytics information from the second communication device, where the network performance analytics information includes network performance analytics information corresponding to M candidate devices, and M is a positive integer. Network performance analytics information corresponding to one candidate device includes at least one of the following information: radio access technology information of the one candidate device; information about a time at which the one candidate device is able to participate in federated learning; location information of the one candidate device; information about a time period in which the one candidate device has network coverage; information about a proportion of the time period in which the one candidate device has network coverage to a time of interest during the time of interest; and network signal quality information of the one candidate device.

According to a fourth aspect, a device determining apparatus is provided, including: a receiving unit, configured to receive a first request message from a first communication device, where the first request message is used for requesting to obtain network performance analytics information; and a sending unit, configured to send the network performance analytics information to the first communication device, where the network performance analytics information includes network performance analytics information corresponding to M candidate devices, and M is a positive integer. Network performance analytics information corresponding to one candidate device includes at least one of the following information: radio access technology information of the one candidate device; information about a time at which the one candidate device is able to participate in federated learning; location information of the one candidate device; information about a time period in which the one candidate device has network coverage; information about a proportion of the time period in which the one candidate device has network coverage to a time of interest during the time of interest; and network signal quality information of the one candidate device.

According to a fifth aspect, a communication device is provided, where the communication device includes a processor and a memory, a program or an instruction capable of running on the processor are stored in the memory, and when the program or the instruction is executed by the processor, the steps of the device determining method according to the first aspect or the second aspect are implemented.

According to a sixth aspect, a communication device is provided, including a processor and a communication interface, where when the communication device is a first communication device, the communication interface is configured to send a first request message to a second communication device and receive network performance analytics information from the second communication device. When the communication device is a second communication device, the communication interface is configured to receive a first request message from the first communication device and send network performance analytics information to the first communication device. The network performance analytics information includes network performance analytics information corresponding to M candidate devices, and M is a positive integer. Network performance analytics information corresponding to one candidate device includes at least one of the following information: radio access technology information of the one candidate device; information about a time at which the one candidate device is able to participate in federated learning; location information of the one candidate device; information about a time period in which the one candidate device has network coverage; information about a proportion of the time period in which the one candidate device has network coverage to a time of interest during the time of interest; and network signal quality information of the one candidate device.

According to a seventh aspect, a readable storage medium is provided, where a program or an instruction is stored in the readable storage medium, and when the program or the instruction is executed by a processor, the steps of the device determining method according to the first aspect or the second aspect are implemented.

According to an eighth aspect, a chip is provided, where the chip includes a processor and a communication interface, the communication interface is coupled to the processor, and the processor is configured to run a program or an instruction to implement the steps of the device determining method according to the first aspect or the second aspect.

According to a ninth aspect, a computer program/program product is provided, where the computer program/program product is stored in a storage medium, and the computer program/program product is executed by at least one processor to implement the steps of the device determining method according to the first aspect or the second aspect.

In the embodiments of the application, the first communication device sends a first request message to the second communication device, where the first request message is used for requesting to obtain network performance analytics information. The first communication device receives the network performance analytics information from the second communication device, where the network performance analytics information includes network performance corresponding to M candidate devices, and M is a positive integer. Network performance analytics information corresponding to one candidate device includes at least one of the following information: radio access technology information of the one candidate device; information about a time at which the one candidate device is able to participate in federated learning; location information of the one candidate device; information about a time period in which the one candidate device has network coverage; information about a proportion of the time period in which the one candidate device has network coverage to a time of interest during the time of interest; and network signal quality information of the one candidate device. According to the solution, the radio access technology information of the device, the information about a time in which the device is able to participate in federated learning, the location information, information about a time period with network coverage, information about a proportion of the time period with network coverage to a time of interest, and the network signal quality information can all reflect the corresponding network performance of the device. Therefore, after the first communication device receives the network performance analytics information, the first communication device can determine the network performance corresponding to each candidate device in the M candidate devices, so that the first communication device can determine candidate devices that meet a network performance requirement of federated learning as devices participating in federated learning, that is, the first communication device can select appropriate devices to participate in federated learning.

### BRIEF DESCRIPTION OF DRAWINGS

FIG. 1 is a schematic flowchart of a device determining method according to an embodiment of this application;
FIG. 2 is a first schematic flowchart of a device determining method according to an embodiment of this application;
FIG. 3 is a second schematic flowchart of a device determining method according to an embodiment of this application;
FIG. 4 is a first schematic structural diagram of a device determining apparatus according to an embodiment of this application;
FIG. 5 is a second schematic structural diagram of a device determining apparatus according to an embodiment of this application;
FIG. 6 is a schematic structural diagram of a communication device according to an embodiment of this application; and
FIG. 7 is a schematic diagram of hardware of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, the first communication device may be provided in one or more. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

The communication device described in the embodiments of this application (such as a first communication device, a second communication device, a third communication device, a fourth communication device, or a fifth communication device) may be a core network device, or may be referred to as a network element or network node. The core network device may include but is not limited to at least one of the following: a core network node, a core network function, an application Function (Application Function, AF), a network data analytics function (network data analytics function, NWDAF), a unified data management (Unified Data Management, UDM), a network exposure function (Network Exposure Function, NEF), a local NEF (Local NEF, or L-NEF), an operation administration and maintenance (Operation Administration and Maintenance, OAM), a user plane function (User Plane Function, UPF), a session management function (Session Management Function, SMF), a data collection-application function (Data Collection-Application Function, DC-AF), a mobility management entity (Mobility Management Entity, MME), an access mobility management function (Access and Mobility Management Function, AMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data repository (Unified Data Repository, UDR), a home subscriber server (Home Subscriber Server, HSS), a centralized network configuration (Centralized network configuration, CNC), a network repository function (Network Repository Function, NRF), a binding support function (Binding Support Function, BSF), and the like. It should be noted that, in the embodiments of this application, a core network device in an NR system is used as an example for description, and a specific type of the core network device is not limited.

Candidate devices in the embodiments of this application may include terminals (also referred to as terminal devices or user equipment (User Equipment, UE)), or any other possible devices. The terminal may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal is not limited in the embodiments of this application.

The following describes in detail a device determining method provided in the embodiments of this application by using some embodiments and application scenarios thereof with reference to the accompanying drawings.

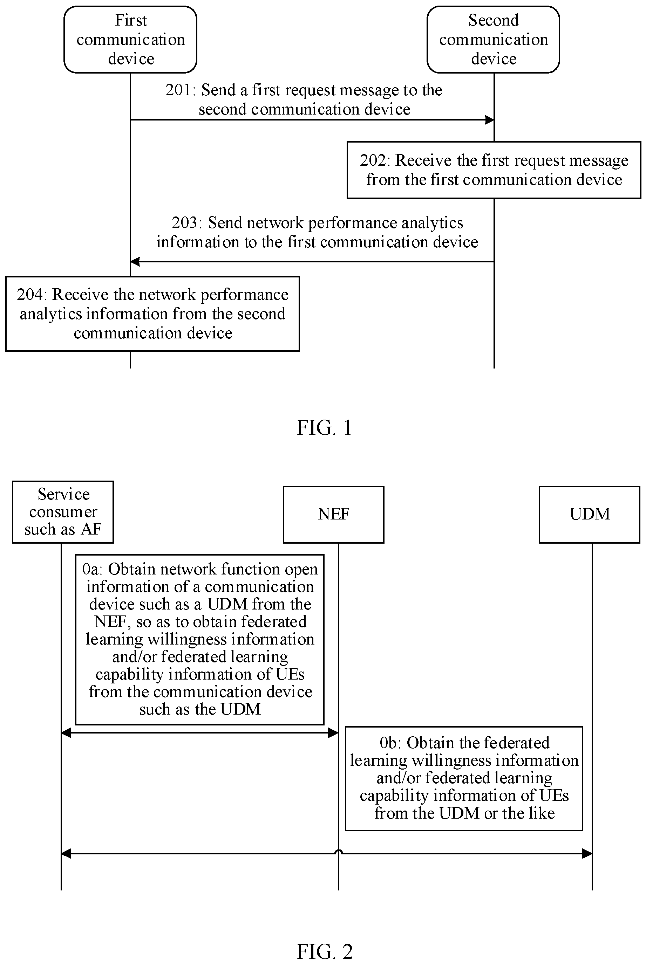

As shown in FIG. 1, the device determining method provided in this embodiment of this application may include the following steps 201 to 204.

Step 201: A first communication device sends a first request message to a second communication device.

Step 202: The second communication device receives the first request message from the first communication device.

The first request message can be used for requesting to obtain network performance analytics information.

Step 203: The second communication device sends network performance analytics information to the first communication device.

Step 204: The first communication device receives the network performance analytics information from the second communication device.

The network performance analytics information may include network performance analytics information corresponding to M candidate devices, and M is a positive integer. Network performance analytics information corresponding to one candidate device may include at least one of the following information:
(a) radio access technology information of the one candidate device;
(b) information about a time at which the one candidate device is able to participate in federated learning;
(c) location information of the one candidate device;
(d) information about a time period in which the one candidate device has network coverage;
(e) information about a proportion of the time period in which the one candidate device has network coverage to a time of interest during the time of interest; and
(f) network signal quality information of the one candidate device.

In this embodiment of this application, after the second communication device receives the first request message, the second communication device may send network performance analytics information corresponding to M candidate devices to the first communication device, so that the first communication device can obtain the network performance of each candidate device in the M candidate devices, so as to determine candidate devices that meet a network performance requirement of federated learning as devices participating in federated learning, that is, the first communication device can select appropriate candidate devices for federated learning.

In this embodiment of this application, because the network performance analytics information can indicate the network performance corresponding to the M candidate devices, the first communication device can obtain the network performance corresponding to each candidate device in the M candidate devices after the first communication device receives the network performance analytics information, so that the first communication device can determine the candidate devices meeting the network performance requirements of federated learning as devices participating in federated learning.

In this embodiment of this application, the first communication device may include an AF or any other possible service consumer entity; the second communication device may include an NWDAF; and the candidate devices may include UE or any other possible devices. This may be specifically determined based on actual use requirements, which is not limited in the embodiments of this application.

In this embodiment of this application, the radio access technology may be a non third generation partnership project (non third generation partnership project, non 3GPP) radio access technology, such as a wireless local area network (wireless local area networks, WLAN), or may be a 3GPP radio access indication, such as a fourth generation communication technology (fourth generation, 4G) evolved UMTS universal terrestrial radio access network (evolved universal terrestrial radio access network, EUTRAN or E-UTRAN) or a fifth generation communication technology (fifth generation, 5G) NR.

For example, for the above (a), the radio access technology information of the one candidate device may indicate that the radio access technology of the candidate device is a non-3GPP WLAN.

In this embodiment of this application, for the above (b), the information about a time at which the one candidate device is able to participate in federated learning may indicate the time at which the candidate device can participate in federated learning, for example, from 00:00 to 04:00 every day.

In this embodiment of this application, for the above (c), the location information of the one candidate device may indicate an area, cell, or tracking area (tracking area, TA) in which the candidate device is located.

In this embodiment of this application, the time of interest may be the time of interest for the first communication device, for example, a time at which the first communication device plans to perform federated learning. For example, the first communication device plans to perform federated learning during 01:00-03:00 on March 15th, 2020.

For the above (d), the information about a time period in which the one candidate device has network coverage may indicate a duration or time period in which the candidate device has network coverage. For the above (e), the information about a proportion of the time period in which the one candidate device has network coverage to a time of interest during the time of interest (which is hereinafter referred to as network coverage time proportion information) may indicate a ratio of a duration in which the candidate device has network coverage to a duration corresponding to the time of interest during the time of interest.

For example, using the candidate device as a terminal and the radio access technology as wireless local area networks (Wireless Local Area Networks, WLAN) as an example, assuming that the time of interest is 3 hours from 8:00 to 11:00 and the terminal has wireless-fidelity (Wireless-Fidelity, Wi-Fi) coverage in 2 hours of the 3 hours, the proportion of the time period in which the terminal has Wi-Fi coverage to the time of interest is 2/3.

Optionally, in this embodiment of this application, the network coverage time proportion information may be described by the proportion of the time period in which the candidate device has network coverage to the time of interest, which is described in, for example but not limited to, a "high, medium and low" manner; or the network coverage time proportion information can also indicate the proportion of the time period in which the candidate device has network coverage to the time of interest in a form of decimal, score, or percentage. This may be specifically determined based on actual use requirements, which is not limited in this embodiment of this application.

In this embodiment of this application, network signal quality information is used to indicate network signal quality of the device. The network signal quality may include at least one of signal quality, signal strength, and signal stability.

The network signal quality may be expressed by an average value or a peak value of the network signal quality parameter.

In this embodiment of this application, it is assumed that the radio access technology is WLAN, and the network signal quality may be indicated by at least one parameter of received signal strength indication (received signal strength indication, RSSI) and round trip time (round trip time, RTT).

Optionally, in this embodiment of this application, the first request message may include reporting granularity indication information, and the reporting granularity indication information may be used to indicate reporting network performance analytics information corresponding to a candidate device based on a granularity of device. For example, the reporting granularity indication information indicates reporting the network performance analytics information corresponding to the candidate UE based on a granularity of UE (per UE). In this way, the first communication device may determine network performance of each UE in the M candidate UEs, so as to select appropriate UEs for participating in federated learning.

Optionally, in this embodiment of this application, the first request information may include filtering information, and the filtering information may include at least one of the following:
(a) Area of interest (area of interest), which can also be referred to attention area, such as one or more cells, or one or more tracking areas (tracking area, TA).
(b) Radio access technology restriction information, where the radio access technology restriction information may be used to indicate a radio access technology of the candidate device. For a related description of the radio access technology, refer to the description of the above embodiment.
(c) Time of interest, where the time of interest may be a time at which the first communication device plans to perform federated learning, for example, 00:00-04:00 on March 15th, 2020, which can be specifically determined according to actual use requirements.

Optionally, in this embodiment of this application, the filtering information may further include at least one of the following:
(d) The number of candidate devices that the second communication device needs to return, that is, a value of M, for example, M=500.
(e) Network signal quality restriction information of the candidate device, where the network signal quality restriction information may be used to indicate a required network signal quality threshold for the candidate device, and the network signal quality threshold may be the minimum requirement for the network signal quality of the candidate device.

For example, using signal stability (which can be expressed by a proportion of a time at which a network signal strength remains above a target value) as an example, when the network signal stability threshold is 90%, it means that the signal strength of the candidate device needs to reach the target value in 90% or more of the time of interest.
(f) Algorithm restriction information, where the algorithm restriction information may be used to indicate a required algorithm related to artificial intelligence (artificial intelligence, AI) data analytics tasks such as machine learning and supported by the candidate device, such as deep learning and linear regression.
(g) Training accuracy restriction information of the model, where the training accuracy restriction information of the model may be used to indicate a required reachable training accuracy of a model usable during participation in federated learning for the candidate device, that is, a model accuracy reachable by the usable model after the training is completed; that is, a proportion of the number of correct predictions (judgments) to the total number of predictions after the training of the model is completed, for example, an accuracy rate of 90%.
(h) Training speed restriction information of the model, where the training speed restriction information of the model may be used to indicate a training time required for training the usable model by the candidate device to a first training accuracy (for example, a correctness rate of 80%) during participation in federated learning. Specifically, it may be a training time required for training the model to the first training accuracy when the candidate device trains the model locally. A longer training time required indicates a slower training speed; and a shorter training time indicates a faster training speed.
(i) Storage space restriction information for federated learning, where the storage space restriction information is used to indicate a required storage space size for information such as models and data and reserved by the candidate device for federated learning, for example, 10 megabits (MB).

Optionally, in this embodiment of this application, the first request message may further include a network performance analytic identifier (analytic identifier, analytic ID), where the analytic identifier may be used to indicate a task corresponding to the first request message, for example, this task is to obtain the network performance of the candidate device meeting the requirement of filtering information. For example, the network performance analytic identifier may be WLAN performance (performance) or NR performance.

Optionally, in this embodiment of this application, the first request message may further include reporting restriction information, where the reporting restriction information may be at least one of the following:
(A) Ranking information of candidate devices, where the ranking information is used to indicate that the second communication device outputs the candidate devices in ascending or descending order of a specific parameter/scale. Assuming that the output is in descending order of signal strength, when the second communication device returns a result (that is, sending the network performance analytics information to the first communication device), the candidate devices can be arranged in ascending order of signal strength.
(B) Grouping information of candidate devices, where the grouping information is used to indicate that the second communication device groups the candidate devices based on a specific parameter/factor (such as time or location). For example, the second communication device may divide candidate devices performing federated learning from 10:00 to 12:00 in the daytime among all candidate devices into one group.
(C) A proportion of the time period in which the candidate device has network coverage to a time of interest during the time of interest (that is, the network coverage time proportion).

For the description of the network coverage time proportion, refer to the related description of the above embodiment. To avoid repetition, details are not described herein again.

(D) Format of network performance analytics information.

(E) Content included in the network performance analytics information.

According to the device determining method provided in this embodiment of this application, the radio access technology information of the device, the information about a time in which the device is able to participate in federated learning, the location information, information about a time period with network coverage, information about a proportion of the time period with network coverage to a time of interest, and the network signal quality information can all reflect the corresponding network performance of the device. Therefore, after the first communication device receives the network performance analytics information, the first communication device can determine the network performance corresponding to each candidate device in the M candidate devices, so that the first communication device can determine candidate devices that meet a network performance requirement of federated learning as devices participating in federated learning, that is, the first communication device can select appropriate devices to participate in federated learning.

Optionally, before the foregoing step 203, the device determining method provided in this embodiment of this application may further include the following step 205 and step 206.

Step 205: The first communication device determines N devices participating in the federated learning from the M candidate devices based on the network performance analytics information, where N is a positive integer less than or equal to M.

Step 206: The first communication device establishes connection to the N devices and performs federated learning.

In this embodiment of this application, after the first communication device receives the network performance analytics information, the first communication device may determine N devices participating in federated learning from the M candidate devices, and then can establish connection to the N devices and perform federated learning, so that a federated learning model meeting the requirement of the first communication device can be obtained.

For example, assuming that the first communication device defines, in the filtering information, UEs that need to be connected to the WLAN and whose signal strength needs to reach a threshold, and also defines federated learning to be performed within a range of city A on March 15th, 2020. The M candidate UEs are UEs meeting these conditions. The first communication device may make selection based on the number of UEs overlapping in time on March 15, 2020. For example, during 2:00-3:00 pm on March 15, 2020, 500 UEs meeting the conditions can participate in federated learning, and 2:00-3:00 pm is a time with the largest quantity of UEs overlapping in time on that day. In this case, the first communication device may use 500 UEs as devices participating in federated learning. Therefore, the first communication device may establish connection to the 500 UEs during 2:00-3:00 pm on March 15th, 2020, and perform federated learning. Alternatively, the first communication device may select UEs with the best network signal strength as devices participating in federated learning.

Optionally, in this embodiment of this application, before the foregoing step 205, the device determining method provided in this embodiment of this application may further include at least one of the following steps 207 and 208.

It should be noted that a specific execution sequence/occasion of step 207 and step 208 is not limited in this application. Step 207 and step 208 can be executed before step 201 or after step 204, which can be determined specifically according to actual use requirements, which is not limited in this embodiment of this application.

Step 207: The first communication device determines that the M candidate devices have a federated learning willingness.

Step 208: The first communication device determines that the M candidate devices have a federated learning capability.

In this embodiment of this application, before the first communication device determines the N devices participating in federated learning from the M candidate devices based on the network performance analytics information, the first communication device may first determine whether the M candidate devices have a federated learning willingness and/or federated learning capability. In a case that the M candidate devices are determined to have a federated learning willingness and/or federated learning capability, the N devices participating in federated learning can be determined from the M candidate devices.

Optionally, in this embodiment of this application, the foregoing step 207 may be specifically implemented by step 207a and step 207b described below.

Step 207a: The first communication device obtains federated learning willingness information of the M candidate devices from a third communication device.

Step 207b: The first communication device determines, based on the federated learning willingness information of the M candidate devices, that the M candidate devices have the federated learning willingness.

In this embodiment of this application, after the first communication device obtains the federated learning willingness information of the M candidate devices from the third communication device, the first communication device can determine, based on the federated learning willingness information of the M candidate devices, that the M candidate devices have the federated learning willingness.

Optionally, in this embodiment of this application, the first communication device obtains federated learning willingness information of Q devices from the third communication device, and obtains the federated learning willingness information of the M candidate devices through filtering on the federated learning willingness information of the Q devices. It can be understood that the Q devices may include the M candidate devices.

In this embodiment, the third communication device may be a UDM.

Optionally, in this embodiment of this application, the federated learning willingness information may include at least one of the following:
indication information of whether to be willing to participate in federated learning; and
condition information for participating in federated learning.

Optionally, in this embodiment of this application, the condition information for participating in federated learning may include at least one of the following:
a radio access technology used during participation in federated learning, such as non-3GPP WLAN;
a time for participating in federated learning, that is, a time for being able to participate in federated learning, such as 2:00-5:00 am; and
a location during participation in federated learning, such as an area located during participation in federated learning or a cell accessed.

Optionally, in this embodiment of this application, the foregoing step 208 may be specifically implemented by step 208a and step 208b described below.

Step 208a: The first communication device obtains federated learning capability information of the M candidate devices from the third communication device.

Step 208b: The first communication device determines, based on the federated learning capability information of the M candidate devices, that the M candidate devices have the federated learning capability.

In this embodiment of this application, after the first communication device obtains the federated learning capability information of the M candidate devices from the third communication device, the first communication device can determine, based on the federated learning capability information of the M candidate devices, that the M candidate devices have the federated learning capability.

Optionally, in this embodiment of this application, the first communication device obtains federated learning willingness information of S devices from the third communication device, and obtains the federated learning willingness information of the M candidate devices through filtering on the federated learning willingness information of the S devices. It can be understood that the S devices may include the M candidate devices.

Optionally, in this embodiment of this application, the federated learning capability information may include at least one of the following:
a model usable during participation in federated learning, for example, a model using a specific network architecture such as a residual network (Residual Networks, ResNet) or Inception-v3;
an algorithm usable during participation in federated learning, for example, gradient descent;
a reachable model training accuracy during participation in federated learning, that is, a model accuracy that can be reached by the usable model after training of the usable model is completed, such as a reachable highest accuracy; that is, a proportion of the number of correct predictions or judgments to the total number after the training of the model is completed, for example, an accuracy rate of 90%;
a reachable model training speed during participation in federated learning, where the training speed is used to indicate a training time required for training the usable model to a first training accuracy, that is, a training time (for example, 30 minutes) required for training the model to a first training accuracy (for example, 80%) when the first device trains the usable model locally; where a longer training time indicates a slower training speed; and a shorter training time indicates a faster training speed; and
a size of storage space for participating in federated learning, that is, a storage space size for information such as models and data and reserved for federated learning, such as 15MB.

Optionally, before the foregoing step 207a or step 208a, the device determining method provided in this embodiment of this application may further include the following step 209.

Step 209: The first communication device obtains network function open information of the third communication device from a fifth communication device.

The fifth communication device may be an NEF or other communication devices, which may be specifically determined according to actual use requirements.

The first communication device may send second request information to the fifth communication device to request to obtain network function open information of the third communication device, so as to interact with the third communication device. For example, the first communication device may obtain the federated learning willingness information of the M candidate devices and/or the federated learning capability information of the M candidate devices from the third communication device.

Optionally, in this embodiment of this application, before the foregoing step 203, the device determining method provided in this embodiment of this application may further include the following steps 210 and 211.

Step 210: The second communication device obtains network performance data corresponding to the M candidate devices from a fourth communication device.

Step 211: The second communication device analyzes the network performance data corresponding to the M candidate devices to obtain the network performance analytics information corresponding to the M candidate devices.

In this embodiment of this application, the second communication device may obtain the network performance data corresponding to the M candidate devices from the fourth communication device, and then analyze the network performance data corresponding to the M candidate devices, so as to obtain the network performance analytics information corresponding to the M candidate devices.

Optionally, in this embodiment of this application, the fourth communication device may include at least one of network elements such as an SMF, an OAM, a UDM, and a DC-AF.

Optionally, in this embodiment of this application, the foregoing step 210 may be specifically implemented by at least one of step 210a and step 210b described below.

Step 210a: The second communication device obtains, from an SMF, at least one of the following corresponding to the M candidate devices: radio access technology information, network coverage time information, and session time information in a network.

Step 210b: The second communication device obtains, from a network management device, at least one of network identification information and network signal quality information that are corresponding to the M candidate devices.

For example, if the second communication device is an NWDAF, the NWDAF may obtain network signal quality information corresponding to the M candidate devices from the OAM, such as signal quality information (such as RTT or RSSI) of the devices connecting to WLAN; obtains network identification information corresponding to the M candidate devices such as a service set identifier (Service Set Identifier, SSID) from the OAM; obtains radio access technology information corresponding to the M candidate devices, such as WLAN, 5G NR, or 4G EUTRAN from the SMF; obtains network coverage time information corresponding to the M candidate devices such as a WLAN coverage time from the SMF; obtains algorithm information supported by the M candidate devices, reachable model training accuracy information, and the like from the UDM or DCAF; and obtains traffic information corresponding to the M candidate devices from the UPF.

In this embodiment of this application, after the second communication device obtains the network performance data corresponding to the M candidate devices, the second communication device may analyze the network performance data of the M candidate devices, so as to obtain network performance analytics results of the M candidate devices, and further generate the network performance analytics information corresponding to the M candidate devices based on the network performance analytics results of the M candidate devices.

With reference to table 1, network performance analytics results of the device are described illustratively by using a radio access mode of the device being WLAN as an example.

**Table 1**

| Information name | Information description |
|---|---|
| >Device identifier (1...max) | For example, subscription permanent identifier (Subscription Permanent Identifier, SUPI) or Internet Protocol (Internet Protocol, IP) address |
| >>Observation time | Analytics target period (analytics target period), or sub-periods of an analytics target period |
| >>Radio access technology | For example, WLAN |
| >>Device location information | Location, such as latitude and longitude or an accessed cell |
| >>WLAN coverage time information | Time period covered by Wi-Fi |
| >>>Start time | Start time point |
| >>>End time | End time point |
| >>>Duration | Persistent time period |
| >>WLAN coverage time proportion | Proportion of a WLAN coverage time to an observation period |
| >>Signal quality information | For example, RSSI or RTT |
| >>>Average signal quality | Average RSSI or average RTT |
| >>>Peak signal quality | Maximum or minimum value of RSSI and RTT |
| >>>Signal quality distribution | Proportion of RSSI, RTT variance, or signal quality in a range, such as a proportion of a corresponding time of RSSI to a total time in a range 1 |

Optionally, in this embodiment of this application, before the foregoing step 203, the device determining method provided in this embodiment of this application may further include the following step 212.

Step 212: The second communication device determines M candidate devices based on the filtering information included in the first request message.

Each candidate device in the M candidate devices meets at least one of the following conditions:
being located in the area of interest;
a radio access technology is a radio access technology indicated by the radio access technology restriction information; and
network coverage is present during the time of interest.

Optionally, in this embodiment of this application, each candidate device in the M candidate devices may further meet at least one of the following conditions:
the network signal quality is greater than or equal to network signal quality indicated by the network signal quality restriction information;
a supported algorithm is an algorithm indicated by algorithm restriction information;
the reachable model training accuracy during participation in federated learning is greater than or equal to a training accuracy indicated by the model training accuracy restriction information;
the reachable model training speed during participation in federated learning is greater than or equal to a training speed indicated by the model training speed restriction information; and
the size of storage space participating in federated learning is greater than or equal to a size of storage space indicated by the storage space restriction information of federated learning.

For example, assuming that the training accuracy indicated by the model training accuracy restriction information is 85%, the training accuracy of the model that can be reached by one of the K devices during participation in federated learning is 93%, and the device can be then determined as a candidate device.

Optionally, in this embodiment of this application, before the foregoing step 203, the device determining method provided in this embodiment of this application may further include the following steps 213 and/or 214.

Step 213: The second communication device determines that the M candidate devices have a federated learning willingness.

Step 214: The second communication device determines that the M candidate devices have a federated learning capability.

In this embodiment of this application, before the second communication device sends the network performance analytics information to the first communication device, the first communication device may first determine whether the M candidate devices have a federated learning willingness and/or federated learning capability, and may send the network performance analytics information corresponding to the M candidate devices to the first communication device if it is determined that the M candidate devices have the federated learning willingness and/or federated learning capability.

Optionally, in this embodiment of this application, the foregoing step 213 may be specifically implemented by step 213a and step 213b described below.

Step 213a: The second communication device obtains federated learning willingness information of the M candidate devices from the third communication device.

Step 213b: The second communication device determines, based on the federated learning willingness information of the M candidate devices, that the M candidate devices have the federated learning willingness.

In this embodiment of this application, after the second communication device obtains the federated learning willingness information of the M candidate devices from the third communication device, the first communication device can determine, based on the federated learning willingness information of the M candidate devices, that the M candidate devices have a federated learning willingness, so as to send to the first communication device the network performance analytics information corresponding to the M candidate devices with the federated learning willingness. In this way, the first communication device can directly select corresponding devices from the M candidate devices to participate in federated learning.

Optionally, in this embodiment of this application, the second communication device obtains federated learning willingness information of W devices from the third communication device, and obtains the federated learning willingness information of the M candidate devices through filtering on the federated learning willingness information of the W devices. It can be understood that the W devices may include the M candidate devices.

In this embodiment, the third communication device may be a UDM.

It should be noted that for the description of the federated learning willingness information, reference may be made to the description in the foregoing embodiment. To avoid repetition, details are not described herein again.

Optionally, in this embodiment of this application, the foregoing step 214 may be specifically implemented by step 214a and step 214b described below.

Step 214a: The second communication device obtains federated learning capability information of the M candidate devices from the third communication device.

Step 214b: The second communication device determines, based on the federated learning capability information of the M candidate devices, that the M candidate devices have the federated learning capability.

In this embodiment of this application, after the second communication device obtains the federated learning capability information of the M candidate devices from the third communication device, the first communication device can determine, based on the federated learning capability information of the M candidate devices, that the M candidate devices have a federated learning capability, so as to send the network performance analytics information corresponding to the M candidate devices with the federated learning capability to the first communication device. In this way, the first communication device can directly select corresponding devices from the M candidate devices to participate in federated learning.

Optionally, in this embodiment of this application, the second communication device obtains federated learning capability information of P devices from the third communication device, and obtains the federated learning capability information of the M candidate devices through filtering on federated learning willingness capabilities of the P devices. It can be understood that the P devices may include the M candidate devices.

It should be noted that for the description of the federated learning capability information, reference may be made to the description in the foregoing embodiment. To avoid repetition, details are not described herein again.

Optionally, before the foregoing step 213a or step 214a, the device determining method provided in this embodiment of this application may further include the following step 215.

Step 215: The second communication device obtains network function open information of the third communication device from a fifth communication device.

The fifth communication device may be an NEF or other communication devices, which may be specifically determined according to actual use requirements.

The second communication device may send second request information to the fifth communication device to request to obtain network function open information of the third communication device, so as to interact with the third communication device. For example, the second communication device may obtain the federated learning willingness information of the M candidate devices and/or the federated learning capability information of the M candidate devices from the third communication device.

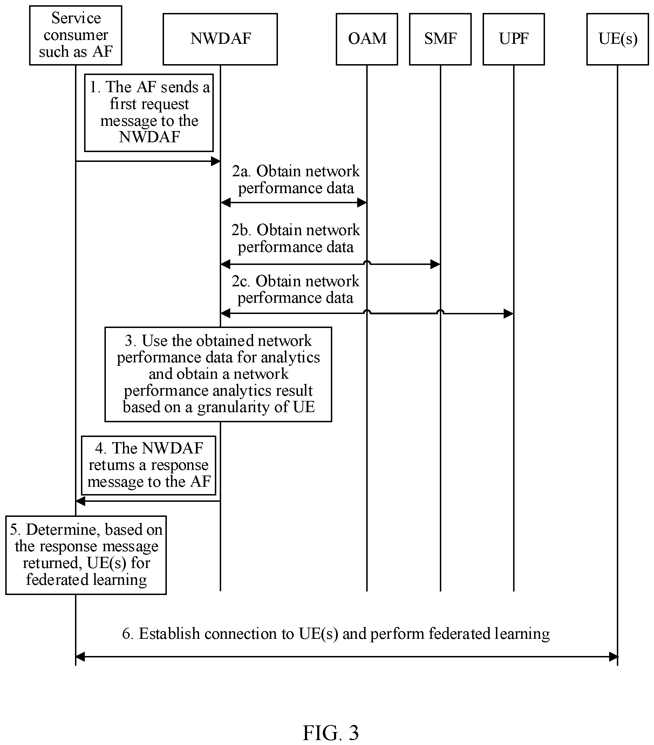

The following describes the device determining method provided in this embodiment of this application by using examples with reference to FIG. 2 and FIG. 3.

As shown in FIG. 2, step 0a: A service consumer such as an AF sends a request to an NEF to obtain network function open information of a communication device such as a UDM/NRF/DCAF, so as to obtain federated learning willingness information and/or federated learning capability information of candidate devices from the communication device such as the UDM and then determine whether the devices have a federated learning capability and/or a federated learning willingness.

Step 0b: The service consumer such as the AF requests a capability storage network element such as the UDM/NRF/DC-AF for federated learning willingness information and/or federated learning capability information.

As shown in FIG. 3, step 1: The service consumer such as the AF sends a first request message (Nnwdaf_AnalyticsInfo or Nnwdaf_ AnalyticsSubscription may be used) to the NWDAF to request network performance analytics information.

Step 2: The NWDAF obtains network performance data about a radio access technology and signal quality of UEs from a data provider such as an SMF, OAM, or UDM based on a task description and restriction condition in the first request message. Step 2 may include step 2a, step 2b, and step 2c.

Step 3: The NWDAF uses the obtained network performance data for analytics, and obtains a network performance analytics result based on a granularity of UE, so as to obtain network performance analytics information.

Step 4: The NWDAF returns a task response message based on description information in the first request message in step 1, that is, sends the network performance analytics information to the service consumer such as the AF. The NWDAF may correspondingly make a response based on Nnwdaf_ AnalyticsInfo or Nnwdaf_ AnalyticsSubscription used in step 1.

Step 5: The service consumer such as the AF determines, based on the response message returned in step 4, UE(s) participating in federated learning.

Step 6: The service consumer such as the AF establishes connection to UE(s) based on identification information of the UE(s) participating in federated learning determined in step 5, and performs federated learning.

In the device determining method provided in the embodiments of this application, the execution subject may be a device determining apparatus. In the embodiments of this application, the device determining method being performed by the device determining apparatus is used as an example to describe the device determining apparatus provided in the embodiments of this application.

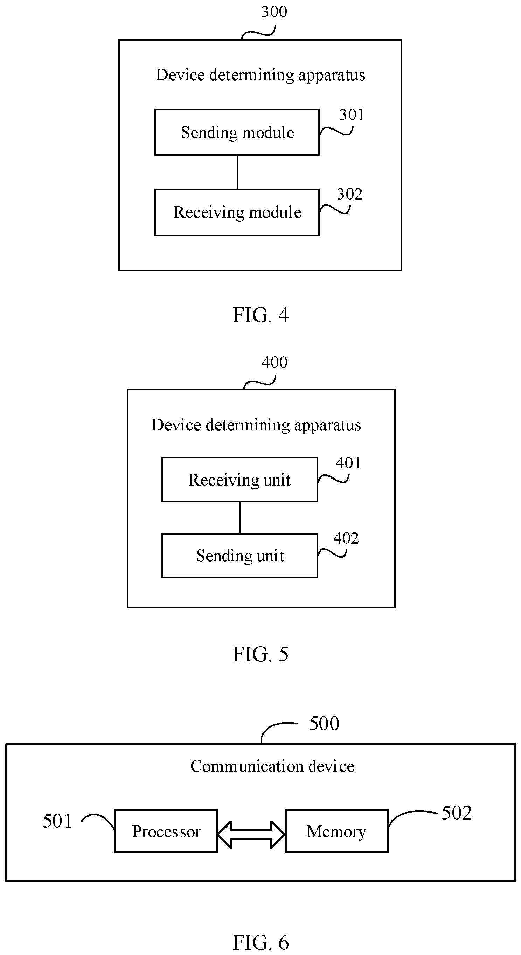

As shown in FIG. 4, an embodiment of this application provides a device determining apparatus 300, and the device determining apparatus 300 for federated learning includes a sending module 301 and a receiving module 302. The sending module 301 is configured to send a first request message to a second communication device, where the first request message is used for requesting to obtain network performance analytics information; and the receiving module 302 is configured to receive the network performance analytics information from the second communication device, where the network performance analytics information includes network performance analytics information corresponding to M candidate devices, and M is a positive integer. Network performance analytics information corresponding to one candidate device includes at least one of the following information: radio access technology information of the one candidate device; information about a time at which the one candidate device is able to participate in federated learning; location information of the one candidate device; information about a time period in which the one candidate device has network coverage; information about a proportion of the time period in which the one candidate device has network coverage to a time of interest during the time of interest; and network signal quality information of the one candidate device.

Optionally, the device determining apparatus further includes a determining module and an execution module. The determining module is configured to determine N devices participating in federated learning from the M candidate devices based on the network performance analytics information, where N is a positive integer less than or equal to M; and the execution module is configured to establish connection to the N devices and perform federated learning.

Optionally, the first request message includes reporting granularity indication information, and the reporting granularity indication information is used to indicate reporting network performance corresponding to a candidate device based on a granularity of device.

Optionally, the first request message includes filtering information, and the filtering information includes at least one of the following:
an area of interest;
radio access technology restriction information; and
the time of interest.

Optionally, the determining module is further configured to determine that the M candidate devices have a federated learning willingness; and/or the determining module is further configured to determine that the M candidate devices have a federated learning capability.

Optionally, the determining module includes an obtaining submodule and a determining submodule. The obtaining submodule is configured to obtain federated learning willingness information of the M candidate devices from a third communication device; and the determining submodule is configured to determine, based on the federated learning willingness information of the M candidate devices, that the M candidate devices have the federated learning willingness. Optionally, the determining module includes an obtaining submodule and a determining submodule. The obtaining submodule is configured to obtain federated learning capability information of the M candidate devices from a third communication device; and the determining submodule is configured to determine, based on the federated learning capability information of the M candidate devices, that the M candidate devices have the federated learning capability.

Optionally, the federated learning willingness information includes at least one of the following:
indication information of whether to be willing to participate in federated learning; and
condition information for participating in federated learning.

Optionally, the condition information for participating in federated learning includes at least one of the following:
a radio access technology used during participation in federated learning;
a time for participating in federated learning; and
a location during participation in federated learning.

Optionally, the federated learning capability information includes at least one of the following:
a model usable during participation in federated learning;
an algorithm usable during participation in federated learning;
a reachable model training accuracy during participation in federated learning;
a reachable model training speed during participation in federated learning, where the training speed is used to indicate a training time required for training the usable model to a first training accuracy; and
a size of storage space for participating in federated learning.

Optionally, the second communication device includes an NWDAF.

An embodiment of this application provides a device determining apparatus. The radio access technology information of the device, the information about a time in which the device is able to participate in federated learning, the location information, information about a time period with network coverage, information about a proportion of the time period with network coverage to a time of interest, and the network signal quality information can all reflect the corresponding network performance of the device. Therefore, after receiving the network performance analytics information, the device determining apparatus can determine the network performance corresponding to each candidate device in the M candidate devices, so as to determine the candidate devices that meet a network performance requirement of federated learning as devices participating in federated learning, that is, the device determining apparatus can select appropriate devices to participate in federated learning.

As shown in FIG. 5, an embodiment of this application provides a device determining apparatus 400, and the device determining apparatus 400 includes a receiving unit 401 and a sending unit 402. The receiving unit 401 may be configured to receive a first request message from a first communication device, where the first request message is used for requesting to obtain network performance analytics information; and the sending unit is configured to send the network performance analytics information to the first communication device, where the network performance analytics information includes network performance analytics information corresponding to M candidate devices, and M is a positive integer. Network performance analytics information corresponding to one candidate device includes at least one of the following information: radio access technology information of the one candidate device; information about a time at which the one candidate device is able to participate in federated learning; location information of the one candidate device; information about a time period in which the one candidate device has network coverage; information about a proportion of the time period in which the one candidate device has network coverage to a time of interest during the time of interest; and network signal quality information of the one candidate device.

Optionally, the first request message includes reporting granularity indication information, and the reporting granularity indication information is used to indicate reporting network performance corresponding to a candidate device based on a granularity of device.

Optionally, the first request message includes filtering information, and the filtering information includes at least one of the following:
an area of interest;
radio access technology restriction information; and
the time of interest.

Optionally, the device determining apparatus further includes an obtaining unit and an analytics unit. The obtaining unit, configured to obtain network performance data corresponding to M candidate devices from a fourth communication device; and the analytics unit is configured to analyze the network performance data corresponding to the M candidate devices to obtain the network performance analytics information corresponding to the M candidate devices.

Optionally, the obtaining unit includes a first obtaining subunit and a second obtaining subunit. The first obtaining subunit is configured to obtain, from a session management function network element SMF, at least one of the following corresponding to the M candidate devices: radio access technology information, network coverage time information, and session time information in a network. The second obtaining subunit is configured to obtain, from a network management device, at least one of network identification information and network signal quality information that are corresponding to the M candidate devices.

Optionally, the device determining apparatus further includes a determining unit, and the determining unit is configured to determine the M candidate devices based on filtering information included in the first request message, where each candidate device in the M candidate devices meets at least one of the following conditions:
being located in the area of interest;
a radio access technology is a radio access technology indicated by the radio access technology restriction information; and
network coverage is present during the time of interest.

Optionally, the device determining apparatus further includes a determining unit. The determining unit is configured to determine that the M candidate devices have a federated learning willingness; and/or the determining unit is configured to determine that the M candidate devices have a federated learning capability.

Optionally, the determining unit includes an obtaining subunit and a determining subunit. the obtaining subunit is configured to obtain federated learning willingness information of the M candidate devices from a third communication device; and the determining subunit is configured to determine, based on the federated learning willingness information of the M candidate devices, that the M candidate devices have the federated learning willingness.

Optionally, the determining unit includes an obtaining subunit and a determining subunit. the obtaining subunit is configured to obtain federated learning capability information of the M candidate devices from a third communication device; and the determining subunit is configured to determine, based on the federated learning capability information of the M candidate devices, that the M candidate devices have the federated learning capability.

Optionally, the federated learning willingness information includes at least one of the following:
indication information of whether to be willing to participate in federated learning; and
condition information for participating in federated learning.

Optionally, the condition information for participating in federated learning includes at least one of the following:
a radio access technology used during participation in federated learning;
a time for participating in federated learning; and
a location during participation in federated learning.

Optionally, the federated learning capability information includes at least one of the following:
a model usable during participation in federated learning;
an algorithm usable during participation in federated learning;
a reachable model training accuracy during participation in federated learning;
a reachable model training speed during participation in federated learning, where the training speed is used to indicate a training time required for training the usable model to a first training accuracy; and
a size of storage space for participating in federated learning.

An embodiment of this application provides a device determining apparatus. The radio access technology information of the device, the information about a time in which the device is able to participate in federated learning, the location information, information about a time period with network coverage, information about a proportion of the time period with network coverage to a time of interest, and the network signal quality information can all reflect the corresponding network performance of the device. Therefore, after the device determining apparatus sends the network performance analytics information to the first communication device, the first communication device can determine the network performance corresponding to each candidate device in the M candidate devices, so that the first communication device can determine candidate devices that meet a network performance requirement of federated learning as devices participating in federated learning, that is, the first communication device can select appropriate devices to participate in federated learning.

The device determining apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The device determining apparatus provided in this embodiment of this application is capable of implementing the processes implemented in the method embodiments, with the same technical effects achieved. To avoid repetition, details are not described herein again.

Optionally, as shown in FIG. 6, an embodiment of this application further provides a communication device 500, including a processor 501, a memory 502, and a program or an instruction stored in the memory 502 and capable of running on the processor 501. For example, when the communication device 500 is a first communication device and when the program or the instruction is executed by the processor 501, the steps of the foregoing embodiments of the device determining method are implemented, with the same technical effects achieved. When the communication device 500 is a second communication device and when the program or the instruction is executed by the processor 501, the steps of the foregoing embodiments of the device determining method are implemented, with the same technical effects achieved. To avoid repetition, details are not described herein again.

An embodiment of this application further provides a communication device, including a processor and a communication interface. When the communication device is a first communication device, the communication interface is configured to send a first request message to a second communication device and receive network performance analytics information from the second communication device. When the communication device is a second communication device, the communication interface is configured to receive a first request message from the first communication device and send network performance analytics information to the first communication device. The network performance analytics information includes network performance analytics information corresponding to M candidate devices, and M is a positive integer. Network performance analytics information corresponding to one candidate device includes at least one of the following information: radio access technology information of the one candidate device; information about a time at which the one candidate device is able to participate in federated learning; location information of the one candidate device; information about a time period in which the one candidate device has network coverage; information about a proportion of the time period in which the one candidate device has network coverage to a time of interest during the time of interest; and network signal quality information of the one candidate device. The communication device embodiments correspond to the method embodiments of the first communication device or the second communication device, and the implementation processes and implementations of the foregoing method embodiments can be applied to the communication device embodiments, with the same technical effects achieved.

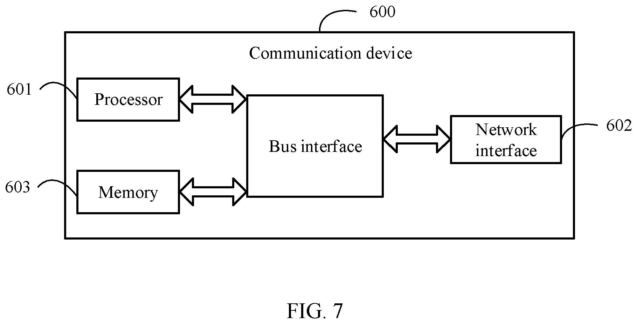

Specifically, an embodiment of this application further provides a communication device. As shown in FIG. 7, the communication device 600 includes a processor 601, a network interface 602, and a memory 603. The network interface 602 is, for example, a common public radio interface (common public radio interface, CPRI).

Specifically, the communication device 600 in this embodiment of the present invention further includes: an instruction or a program stored in the memory 603 and capable of running on the processor 601. The processor 601 invokes the instruction or program in the memory 603 to execute the method executed by the modules in the device determining apparatus, with the same technical effects achieved. To avoid repetition, details are not described herein again.

An embodiment of this application further provides a readable storage medium, where a program or an instruction is stored in the readable storage medium. When the program or the instruction is executed by a processor, the processes of the foregoing embodiment of the device determining method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or an instruction to implement the processes of the foregoing device determining method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing device determining method embodiments, with the same technical effects achieved. To avoid repetition, details are not described herein again.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A device determining method, wherein the method comprises:
sending, by a first communication device, a first request message to a second communication device, wherein the first request message is used for requesting to obtain network performance analytics information; and
receiving, by the first communication device, the network performance analytics information from the second communication device, wherein the network performance analytics information comprises network performance analytics information corresponding to M candidate devices, and M is a positive integer; wherein
network performance analytics information corresponding to one candidate device comprises at least one of the following information:
radio access technology information of the one candidate device;
information about a time at which the one candidate device is able to participate in federated learning;
location information of the one candidate device;
information about a time period in which the one candidate device has network coverage;
information about a proportion of the time period in which the one candidate device has network coverage to a time of interest during the time of interest; and
network signal quality information of the one candidate device.

2. The method according to claim 1, wherein after the receiving, by the first communication device, the network performance analytics information from the second communication device, the method further comprises:
determining, by the first communication device, N devices participating in the federated learning from the M candidate devices based on the network performance analytics information, wherein N is a positive integer less than or equal to M; and
establishing, by the first communication device, connection to the N devices and performing federated learning.

3. The method according to claim 1, wherein the first request message comprises reporting granularity indication information, and the reporting granularity indication information is used to indicate reporting network performance analytics information corresponding to a candidate device based on a granularity of device.

4. The method according to claim 1, wherein the first request message comprises filtering information, and the filtering information comprises at least one of the following:
an area of interest;
radio access technology restriction information; and
the time of interest.

5. The method according to claim 2, wherein before the determining, by the first communication device, N devices participating in the federated learning from the M candidate devices based on the network performance analytics information, the method further comprises:
determining, by the first communication device, that the M candidate devices have a federated learning willingness; and/or
determining, by the first communication device, that the M candidate devices have a federated learning capability.

6. The method according to claim 5, wherein the determining, by the first communication device, that the M candidate devices have a federated learning willingness comprises:
obtaining, by the first communication device, federated learning willingness information of the M candidate devices from a third communication device; and
determining, by the first communication device based on the federated learning willingness information of the M candidate devices, that the M candidate devices have the federated learning willingness.

7. The method according to claim 5, wherein the determining, by the first communication device, that the M candidate devices have a federated learning capability comprises:
obtaining, by the first communication device, federated learning capability information of the M candidate devices from a third communication device; and
determining, by the first communication device based on the federated learning capability information of the M candidate devices, that the M candidate devices have the federated learning capability.

8. The method according to claim 6, wherein the federated learning willingness information comprises at least one of the following:
indication information of whether to be willing to participate in federated learning; and
condition information for participating in federated learning.

9. The method according to claim 8, wherein the condition information for participating in federated learning comprises at least one of the following:
a radio access technology used during participation in federated learning;
a time for participating in federated learning; and
a location during participation in federated learning.

10. The method according to claim 7, wherein the federated learning capability information comprises at least one of the following:
a model usable during participation in federated learning;
an algorithm usable during participation in federated learning;
a reachable model training accuracy during participation in federated learning;
a reachable model training speed during participation in federated learning, wherein the training speed is used to indicate a training time required for training the usable model to a first training accuracy; and
a size of storage space for participating in federated learning.

11. The method according to claim 1, wherein the first communication device comprises an application function AF, and the second communication device comprises a network data analytics function NWDAF.

12. A device determining method, wherein the method comprises:
receiving, by a second communication device, a first request message from a first communication device, wherein the first request message is used for requesting to obtain network performance analytics information; and
sending, by the second communication device, the network performance analytics information to the first communication device, wherein the network performance analytics information comprises network performance analytics information corresponding to M candidate devices, and M is a positive integer; wherein
network performance analytics information corresponding to one candidate device comprises at least one of the following information:
radio access technology information of the one candidate device;
information about a time at which the one candidate device is able to participate in federated learning;
location information of the one candidate device;
information about a time period in which the one candidate device has network coverage;
information about a proportion of the time period in which the one candidate device has network coverage to a time of interest during the time of interest; and
network signal quality information of the one candidate device.

13. The method according to claim 12, wherein the first request message comprises reporting granularity indication information, and the reporting granularity indication information is used to indicate reporting network performance analytics information corresponding to a candidate device based on a granularity of device.

14. The method according to claim 12, wherein the first request message comprises filtering information, and the filtering information comprises at least one of the following:
an area of interest;
radio access technology restriction information; and
the time of interest.

15. The method according to any one of claims 12 to 14, wherein before the sending, by the second communication device, the network performance analytics information to the first communication device, the method further comprises:
obtaining, by the second communication device, network performance data corresponding to the M candidate devices from a fourth communication device; and
analyzing, by the second communication device, the network performance data corresponding to the M candidate devices to obtain the network performance analytics information corresponding to the M candidate devices.

16. The method according to claim 15, wherein the obtaining, by the second communication device, network performance data corresponding to the M candidate devices from a fourth communication device comprises at least one of the following:
obtaining, by the second communication device from a session management function network element SMF, at least one of the following corresponding to the M candidate devices: radio access technology information, network coverage time information, and session time information in a network; and
obtaining, by the second communication device from a network management device, at least one of network identification information and network signal quality information that are corresponding to the M candidate devices.

17. The method according to any one of claims 12 to 14, wherein before the sending, by the second communication device, the network performance analytics information to the first communication device, the method further comprises:
determining, by the second communication device, the M candidate devices based on filtering information comprised in the first request message, wherein each candidate device in the M candidate devices meets at least one of the following conditions:
being located in the area of interest;
a radio access technology is a radio access technology indicated by the radio access technology restriction information; and
network coverage is present during the time of interest.

18. The method according to claim 12, wherein before the sending, by the second communication device, the network performance analytics information to the first communication device, the method further comprises:
determining, by the second communication device, that the M candidate devices have a federated learning willingness; and/or
determining, by the second communication device, that the M candidate devices have a federated learning capability.

19. The method according to claim 18, wherein the determining, by the second communication device, that the M candidate devices have a federated learning willingness comprises:
obtaining, by the second communication device, federated learning willingness information of the M candidate devices from a third communication device; and
determining, by the second communication device based on the federated learning willingness information of the M candidate devices, that the M candidate devices have the federated learning willingness.

20. The method according to claim 18, wherein the determining, by the first communication device, that the M candidate devices have a federated learning capability comprises:
obtaining, by the second communication device, federated learning capability information of the M candidate devices from a third communication device; and
determining, by the second communication device based on the federated learning capability information of the M candidate devices, that the M candidate devices have the federated learning capability.

21. The method according to claim 19, wherein the federated learning willingness information comprises at least one of the following:
indication information of whether to be willing to participate in federated learning; and
condition information for participating in federated learning.

22. The method according to claim 20, wherein the condition information for participating in federated learning comprises at least one of the following:
a radio access technology used during participation in federated learning;
a time for participating in federated learning; and
a location during participation in federated learning.

23. The method according to claim 20, wherein the federated learning capability information comprises at least one of the following:
a model usable during participation in federated learning;
an algorithm usable during participation in federated learning;
a reachable model training accuracy during participation in federated learning;
a reachable model training speed during participation in federated learning, wherein the training speed is used to indicate a training time required for training the usable model to a first training accuracy; and
a size of storage space for participating in federated learning.

24. The method according to claim 12, **characterized in that** the first communication device comprises an application function AF, and the second communication device comprises a network data analytics function NWDAF.

25. A device determining apparatus, comprising:
a sending module, configured to send a first request message to a second communication device, wherein the first request message is used for requesting to obtain network performance analytics information; and
a receiving module, configured to receive the network performance analytics information from the second communication device, wherein the network performance analytics information comprises network performance analytics information corresponding to M candidate devices, and M is a positive integer; wherein
network performance analytics information corresponding to one candidate device comprises at least one of the following information:
radio access technology information of the one candidate device;
information about a time at which the one candidate device is able to participate in federated learning;
location information of the one candidate device;
information about a time period in which the one candidate device has network coverage;
information about a proportion of the time period in which the one candidate device has network coverage to a time of interest during the time of interest; and
network signal quality information of the one candidate device.

26. The apparatus according to claim 25, wherein the device determining apparatus further comprises a determining module and an execution module; wherein
the determining module is configured to determine N devices participating in the federated learning from the M candidate devices based on the network performance analytics information, wherein N is a positive integer less than or equal to M; and
the execution module is configured to establish connection to the N devices and perform federated learning.

27. The apparatus according to claim 25, wherein the first request message comprises reporting granularity indication information, and the reporting granularity indication information is used to indicate reporting network performance corresponding to a candidate device based on a granularity of device.

28. The apparatus according to claim 25, wherein the first request message comprises filtering information, and the filtering information comprises at least one of the following:
an area of interest;
radio access technology restriction information; and
the time of interest.

29. The apparatus according to claim 26, wherein the determining module is further configured to determine that the M candidate devices have a federated learning willingness; and/or
the determining module is further configured to determine that the M candidate devices have a federated learning capability.

30. The apparatus according to claim 29, wherein the determining module comprises an obtaining submodule and a determining submodule; wherein
the obtaining submodule is configured to obtain federated learning willingness information of the M candidate devices from a third communication device; and
the determining submodule is configured to determine, based on the federated learning willingness information of the M candidate devices, that the M candidate devices have the federated learning willingness.

31. The apparatus according to claim 29, wherein the determining module comprises an obtaining submodule and a determining submodule; wherein
the obtaining submodule is configured to obtain federated learning capability information of the M candidate devices from a third communication device; and
the determining submodule is configured to determine, based on the federated learning capability information of the M candidate devices, that the M candidate devices have the federated learning capability.

32. The apparatus according to claim 30, wherein the federated learning willingness information comprises at least one of the following:
indication information of whether to be willing to participate in federated learning; and
condition information for participating in federated learning.

33. The apparatus according to claim 32, wherein the condition information for participating in federated learning comprises at least one of the following:
a radio access technology used during participation in federated learning;
a time for participating in federated learning; and
a location during participation in federated learning.

34. The apparatus according to claim 31, wherein the federated learning capability information comprises at least one of the following:
a model usable during participation in federated learning;
an algorithm usable during participation in federated learning;
a reachable model training accuracy during participation in federated learning;
a reachable model training speed during participation in federated learning, wherein the training speed is used to indicate a training time required for training the usable model to a first training accuracy; and
a size of storage space for participating in federated learning.

35. A device determining apparatus, comprising:
a receiving unit, configured to receive a first request message from a first communication device, wherein the first request message is used for requesting to obtain network performance analytics information; and
a sending unit, configured to send the network performance analytics information to the first communication device, wherein the network performance analytics information comprises network performance analytics information corresponding to M candidate devices, and M is a positive integer; wherein
network performance analytics information corresponding to one candidate device comprises at least one of the following information:
radio access technology information of the one candidate device;
information about a time at which the one candidate device is able to participate in federated learning;
location information of the one candidate device;
information about a time period in which the one candidate device has network coverage;
information about a proportion of the time period in which the one candidate device has network coverage to a time of interest during the time of interest; and
network signal quality information of the one candidate device.

36. The apparatus according to claim 35, wherein the first request message comprises reporting granularity indication information, and the reporting granularity indication information is used to indicate reporting network performance corresponding to a candidate device based on a granularity of device.

37. The apparatus according to claim 35, wherein the first request message comprises filtering information, and the filtering information comprises at least one of the following:
an area of interest;
radio access technology restriction information; and
the time of interest.

38. The apparatus according to any one of claims 35 to 37, wherein the device determining apparatus further comprises an obtaining unit and an analytics unit; wherein
the obtaining unit, configured to obtain network performance data corresponding to M candidate devices from a fourth communication device; and
the analytics unit is configured to analyze the network performance data corresponding to the M candidate devices to obtain the network performance analytics information corresponding to the M candidate devices.

39. The apparatus according to claim 38, wherein the obtaining unit comprises a first obtaining subunit and a second obtaining subunit; wherein
the first obtaining subunit is configured to obtain, from a session management function network element SMF, at least one of the following corresponding to the M candidate devices: radio access technology information, network coverage time information, and session time information in a network; and
the second obtaining subunit is configured to obtain, from a network management device, at least one of network identification information and network signal quality information that are corresponding to the M candidate devices.

40. The apparatus according to any one of claims 35 to 37, wherein the device determining apparatus further comprises a determining unit; wherein
the determining unit is configured to determine the M candidate devices based on filtering information comprised in the first request message, wherein each candidate device in the M candidate devices meets at least one of the following conditions:
being located in the area of interest;
a radio access technology is a radio access technology indicated by the radio access technology restriction information; and
network coverage is present during the time of interest.

41. The apparatus according to claim 35, wherein the device determining apparatus further comprises a determining unit; wherein
the determining unit is configured to determine that the M candidate devices have a federated learning willingness; and/or
the determining unit is further configured to determine that the M candidate devices have a federated learning capability.

42. The apparatus according to claim 41, wherein the determining unit comprises an obtaining subunit and a determining subunit; wherein
the obtaining subunit is configured to obtain federated learning willingness information of the M candidate devices from a third communication device; and
the determining subunit is configured to determine, based on the federated learning willingness information of the M candidate devices, that the M candidate devices have the federated learning willingness.

43. The apparatus according to claim 41, wherein the determining unit comprises an obtaining subunit and a determining subunit; wherein
the obtaining subunit is configured to obtain federated learning capability information of the M candidate devices from a third communication device; and
the determining subunit is configured to determine, based on the federated learning capability information of the M candidate devices, that the M candidate devices have the federated learning capability.

44. A communication device, comprising a processor, a memory, and a program or an instruction stored in the memory and capable of running on the processor, wherein when the program or the instruction is executed by the processor, the steps of the device determining method according to any one of claims 1 to 24 are implemented.

45. A readable storage medium, wherein the readable storage medium stores a program or an instruction, and when the program or the instruction is executed by a processor, the steps of the device determining method according to any one of claims 1 to 24 are implemented.

46. A chip, wherein the chip comprises a processor and a communication interface, the communication interface is coupled to the processor, and the processor is configured to execute a program or an instruction to implement the steps of the device determining method according to any one of claims 1 to 24 are implemented.

47. A computer program product, wherein the computer program product is stored in a non-volatile storage medium, and the computer program product is executed by at least one processor to implement the steps of the device determining method according to any one of claims 1 to 24.

48. An electronic device, wherein the electronic device is configured to perform the steps of the device determining method according to any one of claims 1 to 24.
